# EUROPEAN PATENT APPLICATION

(11) **EP 3 702 668 A1**
(43) Date of publication of application: **02.09.2020**
(21) Application number: 20155442.5
(22) Date of filing: 04.02.2020
(51) Int. Cl.: F23R 3/04, F23R 3/06, F23R 3/00

(54) **COMBUSTION LINER AND GAS TURBINE ENGINE COMPRISING A COMBUSTION LINER**

(30) Priority: 28.02.2019 GB 201902693
(71) Applicant: Rolls-Royce plc, London N1 9FX (GB)
(72) Inventor: Hucker, Paul, Derby, Derbyshire DE24 8BJ (GB); Harding, Stephen, Derby, Derbyshire DE24 8BJ (GB); Borlon, Quentin, Derby, Derbyshire DE24 8BJ (GB)
(74) Representative: Rolls-Royce plc

(57) **Abstract**

A combustion liner (106, 206) for a gas turbine engine (10) defines a bypass direction which extends between an upstream portion and a downstream portion of the combustion liner (106, 206). The combustion liner (106, 206) comprises:

a liner wall (111, 211) for defining at least a portion of a combustion chamber (104, 204), the liner wall (111, 211) having an outer surface (116, 218) and an inner surface (118, 218) and a depth D between the outer and inner surfaces (116, 118) of the combustion liner (106, 206);

a chute (110, 210) formed through the liner wall (111, 211) for conveying fluid from the outer surface (116, 218) through the liner wall (111, 211) and ejecting fluid from an exhaust hole (120, 220) of the chute (110, 210) on the inner surface (118, 218), the exhaust hole (120, 220) having a length L parallel to the bypass direction; and

a fluid-guiding surface (124, 224) on the outer surface of the chute (110, 210), the fluid guiding surface defining an arc terminating at the exhaust hole, the fluid guiding surface configured to guide fluid from a direction generally parallel to the outer surface (116, 218) into the chute (110, 210) to be ejected from the chute (110, 210) exhaust hole (120, 220) at a direction generally perpendicular or upstream, relative to the inner surface, the arc comprising a minimum radius to prevent boundary layer separation of the fluid.

## Description

The present disclosure relates to combustion liners for gas turbine engines.

Gas turbine engines comprise combustion equipment in which fuel is burned to drive the turbines and, consequently, the fan and compressors. The combustion equipment typically comprises a combustion chamber defined within a combustion liner. Combustion liners may comprise chutes, or ports for introducing additional air into the combustion chamber to improve combustion conditions.

It should be understood that improvements are desirable in combustion liners.

According to an aspect there is provided a combustion liner for a gas turbine engine. The combustion liner defines a bypass direction which extends between an upstream portion and a downstream portion of the combustion liner. The combustion liner comprises a liner wall for defining at least a portion of a combustion chamber, the liner wall having an outer surface and an inner surface and a depth between the outer and inner surfaces of the combustion liner. The combustion liner comprises a chute formed through the liner wall for conveying fluid from the outer surface through the liner wall and ejecting fluid from an exhaust hole of the chute on the inner surface, the exhaust hole having a length along the bypass direction. The combustion liner also comprises a fluid-guiding surface formed at an upstream side of the chute, the fluid guiding surface comprises an arc terminating at the exhaust hole. The fluid guiding surface is configured to guide fluid from a direction generally parallel to the outer surface, into the chute, to eject fluid from the exhaust hole at a direction generally perpendicular to the inner surface or at an angle partially upstream.

The arc may have a minimum radius in a plane aligned with the bypass direction and extending vertically between the outer and inner surfaces of the liner wall, the minimum radius selected so that boundary layer separation of the fluid flow does not occur.

The fluid-guiding surface may be configured to gradually transition from the outer surface upstream of the chute, to the exhaust hole so that attachment of the fluid flow is maintained. The fluid guiding surface may be configured to redirect the direction of fluid flow from parallel to the outer surface to approximately perpendicular thereto so that separation of the boundary layer from the fluid-guiding surface does not occur.

If the shape of the fluid guiding surface changes too abruptly, from upstream of fluid guiding surface to the chute exhaust hole, then the boundary layer of the fluid flow may separate. If this occurs, the flow may not be redirected appropriately, and the airflow may enter the combustor at a direction close to the axial direction, which may impair mixing. By maintaining flow attachment to the fluid guiding surface, a jet may be delivered to the combustion chamber approximately perpendicular to the inner surface (i.e. perpendicular to the bypass direction) or at an angle partially upstream. This may further improve mixing.

The arc of the fluid guiding surface may have a minimum radius in a plane aligned with the bypass direction and extending vertically between the outer and inner surfaces of the liner wall, and wherein the minimum radius of the arc of the fluid-guiding surface may be at least 50% of the length L of the exhaust hole of the chute. The plane aligned with the bypass direction may bisect the exhaust hole and the chute along the bypass direction. The plane aligned with the bypass direction may also be aligned with the radial direction. The plane may also be coincident with the axial-radial plane which bisects the exhaust hole.

At least a portion of the arc defined by the fluid guiding surface may be tangential to the bypass direction.

The combustion liner may comprise a plurality of chutes. The plurality of chutes may be arranged in annular or partially annular arrangement. The plurality of chutes may be arranged as a plurality of annular or partially annular arrangements spaced apart along the axial direction.

The minimum radius of the fluid guiding surface may be between 50% and 150%; or 60% and 140%; or 75% and 125%; or 90% and 110% of the length of the exhaust hole of the chute. The radius may be substantially equal to the length of the exhaust hole of the chute. In embodiments where the fluid guiding surface comprises a surface with a constant radius of curvature in the axial direction, the term minimum radius may refer to the smallest radius in the arc of the fluid guiding surface. The minimum radius may be measured in the axial-radial plane and through the midpoint of the chute at any point in the arc of the fluid guiding surface between the radially outermost part of the surface and the exhaust hole.

In embodiments, the difference measured in the radial direction, between the radially outermost part of the fluid guiding surface and the inner surface, may be no less than 50 % of the length of the exhaust hole. That is to say, the maximum height of the fluid guiding surface from the inner surface is no less than 50 % of the length of the exhaust hole. The difference in the radial direction between the radially outermost part of the fluid guiding surface and the inner surface may be between 50% and 150%; or 60% and 140%; or 75% and 125%; or 90% and 110% of the length of the exhaust hole.

In embodiments, the arc of the fluid guiding surface may extend through at least 90 degrees, or at least 100 degrees or at least 120 degrees.

The arc of the fluid guiding surface may terminate at the exhaust hole, at the point of termination the arc may at an angle of 90 degrees or greater relative to the inner surface or a plane parallel thereto. An angle of greater than 90 degrees may direct the jet partially upstream. In embodiments where the exhaust hole is arranged at a different plane to the inner surface, the angle between a plane parallel to the inner surface at the exhaust hole and the arc at the exhaust hole may be measured. In embodiments, the intersection between the arc and inner surface may form an abrupt edge rather than a substantially rounded or filleted profile. This may further increase the penetration length of the jet into the chamber.

In some embodiments the depth of the liner wall may be substantially equal to the radius of the fluid guiding surface, such that the upstream end of the arc fluid guiding surface initiates at a tangent to the outer surface.

In some embodiments the minimum radius of the arc of the fluid guiding surface may be greater than the depth of the liner wall, such that the fluid-guiding surface forms a projection from the outer surface of the liner wall upstream of the chute. For example, from upstream to downstream, the fluid guiding surface may deviate upwards from the outer surface, then gradually transition through an arc comprising the minimum radius, to the exhaust hole.

The arc of the fluid guiding surface may extend between the outer surface of the liner wall and the exhaust hole of the chute and may be substantially perpendicular to the inner surface at the exhaust hole.

The fluid guiding surface may extend part-way or entirely around the circumference of the chute. The fluid guiding surface may extend around the circumference of the chute through an angle at least 45 degrees, 90 degrees, 135 degrees, 180 degrees. The fluid guiding surface may extend around the circumference of the chute through an angle no greater than 90 degrees, 135 degrees, 180 degrees or 270 degrees. The angle through which the fluid guiding surface may extend around the circumference in the plane defined by the outer surface, measured around the centre point of the chute, and the arc defined by the angle is centred on the upstream most point of the chute.

The combustion liner may further comprise a fluid deflector arranged on a downstream side of the chute on the outer surface of the liner wall, the fluid deflector may be configured to deflect fluid moving in the downstream direction into the chute.

The fluid deflector may be configured to inhibit the flow of fluid in the bypass direction past the chute.

The fluid deflector may be a scoop-like element or protrusion configured to deflect fluid along an arcuate path into the chute.

The combustion liner may further comprise an exhaust deflector surface arranged in the chute proximate to the exhaust hole for deflecting fluid in the chute at least partially upstream during ejection from the chute exhaust hole.

The exhaust deflector surface may be arranged on a downstream side of the chute. The exhaust deflector surface may extend at least partially upstream such that an acute angle is formed between the deflector surface and a plane parallel to the inner surface at the exhaust hole. In embodiments, the deflector may extend from a downstream side to a lateral side of the chute. This may additionally be used to direct the vector of the deflected fluid in the circumferential direction. For example, one or more chutes may be configured to direct a jet of air perpendicular to the inner surface when viewed in the axial-radial plane, but with an out-of-plane component, i.e. directing the jet laterally.

The exhaust deflector surface may be formed on a projection which extends laterally into the chute.

The exhaust deflector surface may be arranged on the downstream side of the chute and may extend at least partially upstream such that an obtuse angle is formed between the exhaust deflector surface and the inner surface.

The chute and/or the exhaust hole may be elliptical. The chute and/or exhaust hole may have a major axis or longest dimension of the elliptical shape extending in the bypass direction. In embodiments, the chute and/or exhaust hole may be elliptical with a longer axis in the bypass or circumferential direction. In embodiments, the chute and/or exhaust hole may be circular.

According to an aspect, there is provided a combustion liner for a gas turbine engine. The combustion liner defines a bypass direction which extends between an upstream portion and a downstream portion of the combustion liner. The combustion liner comprises a liner wall for defining at least a portion of a combustion chamber, the liner wall having an outer surface and an inner surface and a depth between the outer and inner surfaces of the combustion liner. The combustion liner comprises a chute formed through the liner wall for conveying fluid from the outer surface through the liner wall and ejecting fluid from an exhaust hole of the chute on the inner surface, the exhaust hole having a length along the bypass direction. The combustion liner may further comprise an exhaust deflector surface arranged in the chute proximate the exhaust hole for deflecting fluid in the chute at least partially upstream during ejection from the chute exhaust hole.

According to an aspect, there is provided a combustion assembly for a gas turbine engine comprising any combustor liner described herein.

According to an aspect, there is provided a gas turbine engine for an aircraft comprising an engine core comprising a turbine, a compressor, and a core shaft (26) connecting the turbine to the compressor; a fan located upstream of the engine core, the fan comprising a plurality of fan blades; and any combustion assembly as described herein. The gas turbine engine may optionally further comprise a gearbox that receives an input from the core shaft and outputs drive to the fan to drive the fan at a lower rotational speed than the core shaft.

Aspects and embodiments disclosed herein may relate to a gas turbine engine. A gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds, for example in the range of from 0.28 to 0.32). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Utip. The work done by the fan blades 13 on the flow results in an enthalpy rise dH of the flow. A fan tip loading may be defined as dH/Utip2, where dH is the enthalpy rise (for example the 1-D average enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4 (all values being dimensionless). The fan tip loading may be in an inclusive range bounded by any two of the values in the previous sentence (i.e. the values may form upper or lower bounds, for example in the range of from 0.28 to 0.31, or 0.29 to 0.3).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds, for example in the range of from 12 to 16, 13 to 15, or 13 to 14). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest-pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds, for example in the range of from 50 to 70).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high-pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds, for example in the range of from 1800K to 1950K). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium-based metal or an aluminium based material (such as an aluminium-lithium alloy) or a steel-based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc to fix the fan blade to the hub/disc. By way of further example, the fan blades maybe formed integrally with a central portion. Such an arrangement may be referred to as a bladed disk or a bladed ring. Any suitable method may be used to manufacture such a bladed disk or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24, or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

In an aspect there is a method of manufacture of a combustion liner for a gas turbine engine. The combustion liner having a bypass direction which extends between an upstream portion and a downstream portion of the combustion liner and having an outer surface, an inner surface and a depth D. The method comprising forming a liner wall, a chute, a fluid guiding surface and optionally one or both of a fluid deflector and an exhaust deflection surface.

In an embodiment, the method of manufacture comprises forming the combustion liner using additive layer manufacture.

In an embodiment there is a method of manufacturing a combustor comprising joining a plurality of liners as defined herein.

The skilled person will appreciate that except where mutually exclusive, a feature or parameter described in relation to any one of the above aspects or embodiments may be applied to any other aspect or embodiment. Furthermore, except where mutually exclusive, any feature or parameter described herein may be applied to any aspect and/or combined with any other feature or parameter described herein.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a detailed cross-sectional view of a combustion apparatus of the gas turbine engine;
Figure 5 is a detailed cross-sectional view of a combustion liner comprising a chute;
Figure 6 is a plan view of the combustion liner of Figure 5;
Figure 7 is a bottom view of the combustion liner of Figure 5;
Figure 8 is a cross-sectional view of the combustion liner of Figure 5;
Figure 9 is a detailed cross-sectional view of an alternative combustion liner comprising a chute; and
Figure 10 is an image from a slightly upstream position of an alternative combustion liner showing a fluid guiding surface and the outer surface.

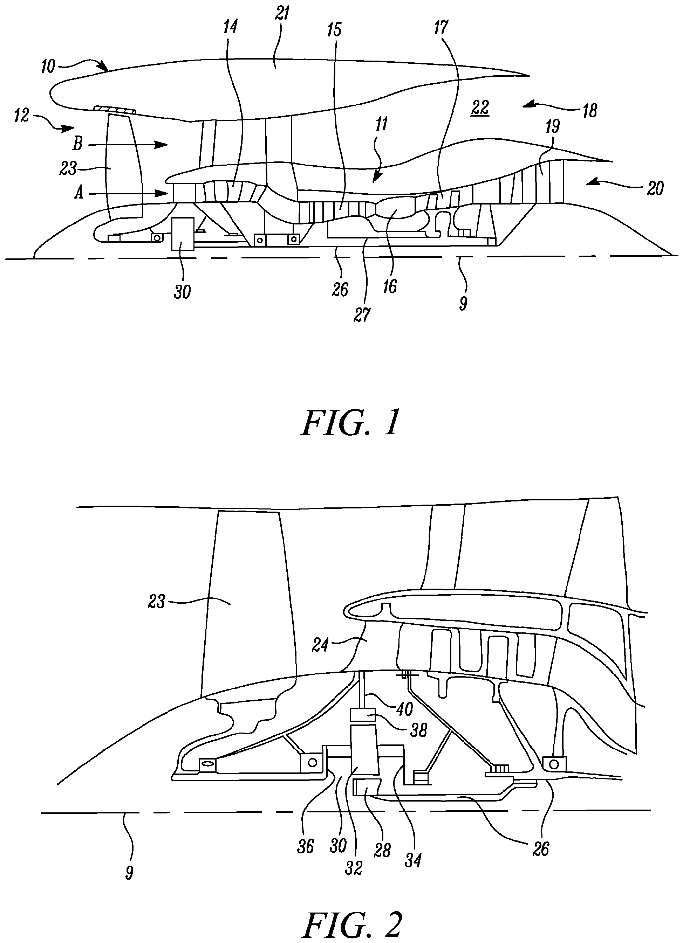

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low-pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

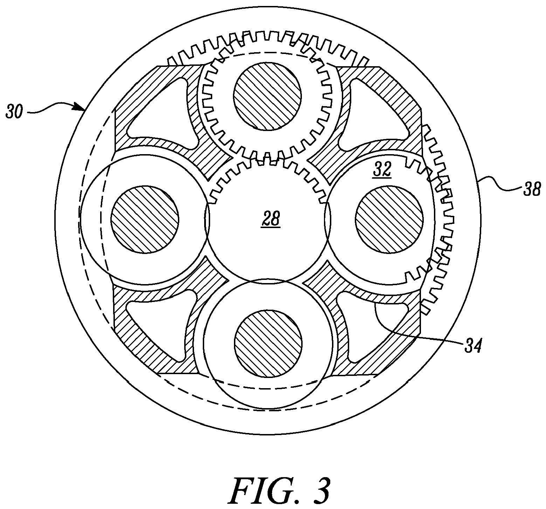

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the disclosure. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

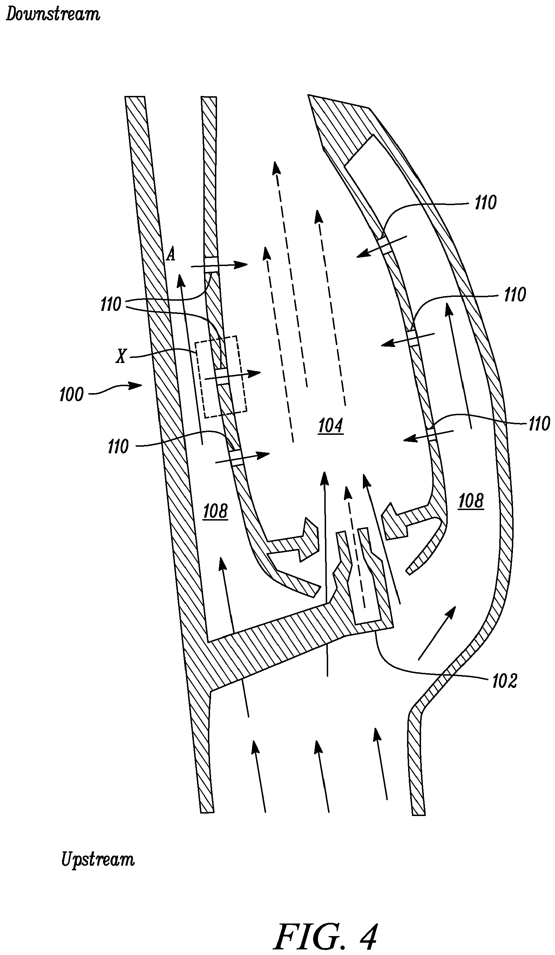

Figure 4 shows a cross-sectional view of combustion apparatus 100 of the combustion equipment 16 of the gas turbine engine 10.

The combustion apparatus 100 comprises a fuel injector 102 which is configured to inject fuel into a combustion chamber 104. The combustion chamber 104 is formed by a combustion liner 106 which defines the size and shape of the combustion chamber 104. The combustion liner is substantially annular in cross section and defines a generally tube-shaped combustion chamber 104 therein. The combustion chamber 104 defines an axis, having an axial direction which runs along the centre of the combustion chamber 104. The term axial direction may also apply to a combustion liner in isolation from a combustion chamber, in which case it may refer to the axis the liner is intended to be arranged around when used in a combustion chamber. The combustion liner, when incorporated into a combustion chamber or combustion apparatus may be spaced from the combustion chamber axis in the radial direction. The term "radial direction" as used herein may refer to the direction perpendicular to the inner or outer surfaces of the liner. This may be equivalent to the radial direction from the combustion chamber axis were the liner to be incorporated into a combustion chamber. Similarly, the terms circumferential or lateral direction may refer to the direction perpendicular to the radial direction and in the plane defined by the inner or outer layers. The combustion liner 106 may be arranged in an annular arrangement with the bypass channel 108 formed around it, such that air flowing into the combustion equipment 16 flows along the combustion outer surface of the combustion liner 106. The flow of air through the combustion apparatus 100 is illustrated by the solid arrows shown on Figure 4.

In use, the outer surface bounds part of the bypass channel and directs bypass air flow roughly parallel to the outer surface. The outer surface 116 of the combustion liner defines a bypass direction parallel to the outer surface, extending from the upstream end of the liner to the downstream end. When the combustion liner is assembled into a combustion apparatus, the bypass direction may be parallel with the axial direction or may radially diverge from the axial direction in the downstream direction.

The fuel injector 102 introduces fuel (as shown by the dotted arrow) into the combustion chamber 104 at the upstream end of the chamber 104. The combustion liner 104 and the fuel injector 102 may comprise apertures and mixing equipment at the upstream end of the liner 106 for air flowing into the combustion equipment 16 to enter the combustion chamber 104 and mix with the fuel. The mixture of fuel and air is ignited in the combustion chamber. The combusting fuel-air mix travels downstream and exits the combustion chamber at high speed, temperature, and pressure (as illustrated by the dashed arrows) to drive the turbines. It will be understood that the combustion liner 106, when assembled into combustion apparatus, generally extends in an axial direction in the engine, from upstream to downstream.

One or a plurality of chutes 110 may be provided through the combustion liner 106. The chutes 110 allow air from the bypass channels 108 to enter the combustion chamber 104. The chutes inject a jet of air into the combustion chamber 104, which contains a hot, fast-flowing fuel-gas mix. The further the air from the chutes is injected into the centre of the combustion chamber, the better the mixing of the fuel-gas mix.

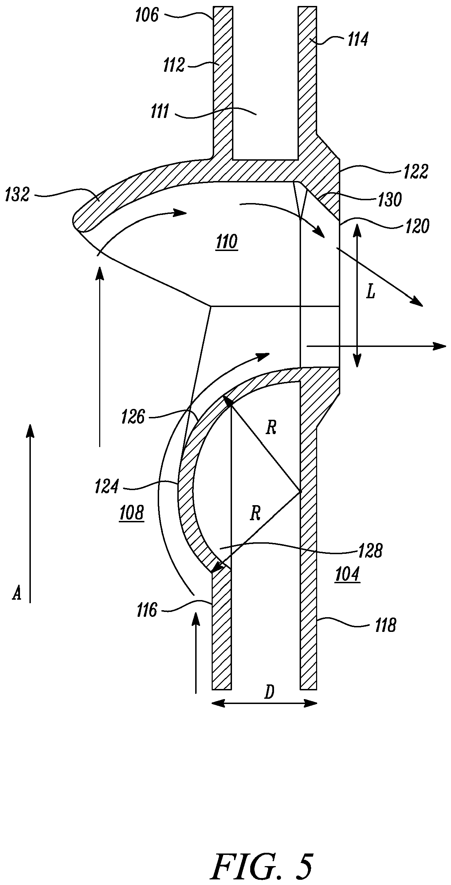

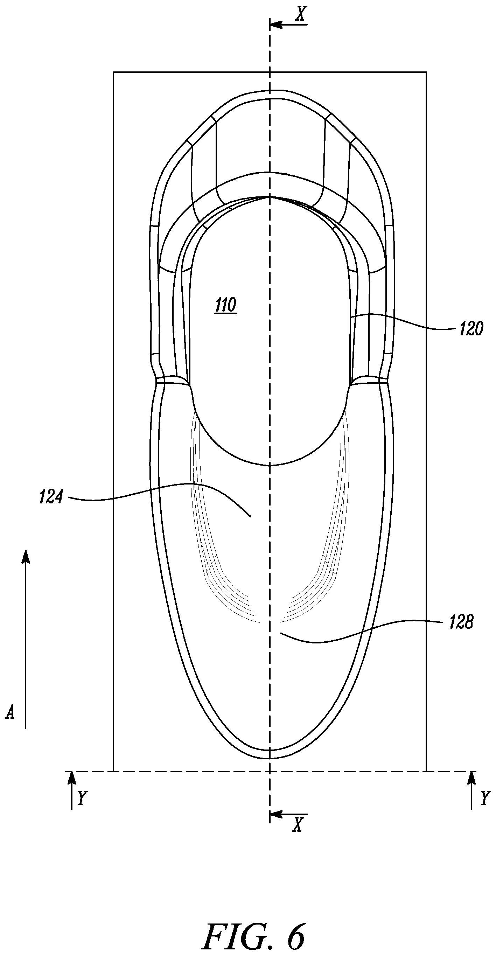

An example of a chute 110 of the combustion liner 106 is shown in Figures 5-8. Figure 5 is a cross-sectional view of the combustion liner 106 and chute 110 as marked by box X in Figure 4. Figure 5 is a cross-sectional view of the chute 110 and liner 106 in the plane X-X as illustrated in Figure 6. The plane on which the view of Figure 5 extends parallel to the bypass direction A and bisects the chute 110 in the bypass direction. The plane extends vertically (or radially with respect to the combustion chamber) and generally perpendicularly between the outer and inner surfaces 116,118 of the liner 106.

As can be seen clearly in Figure 5, the combustion liner 106 comprises a combustion liner wall 111 of two-layer construction, having an outer layer 112 which faces the bypass channel 108 and an inner layer 114 which faces the combustion chamber 104. Each layer may be constructed differently to optimise its characteristics; for example, the inner layer 114 may have better heat-resistant properties than the outer layer 112 because it is exposed to the high temperatures in the combustion chamber 104. In this and other examples, cooling air flow may be passed between the layers 112,114. In some other examples, the combustion liner may instead be of single layer construction or may comprise more than two layers. The outer layer 112 defines an outer surface 116 of the combustion liner wall 111, while the inner layer 114 defines an inner surface 118 of the combustion liner wall 111. The radial or vertical distance between the upper and lower surfaces 116,118 defines the depth D of the combustion liner wall 111.

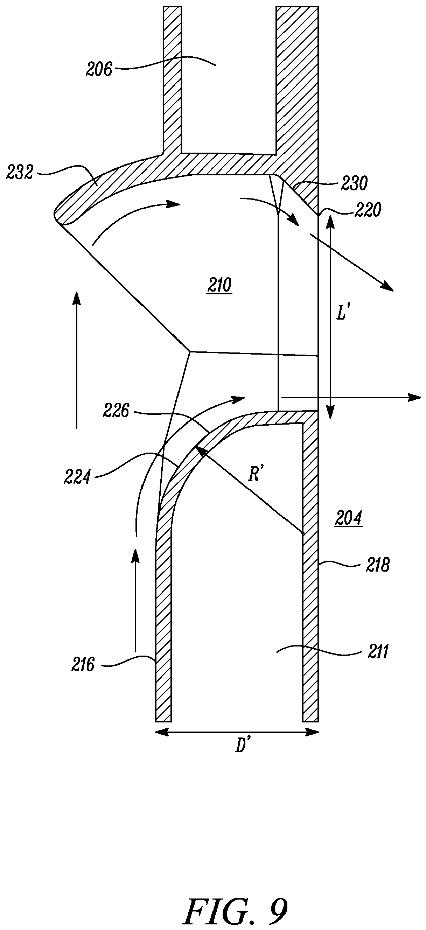

The chute 110 extends through the combustion liner wall 111 from the upper surface 116 to the lower surface 118. The chute 110 is configured to convey air from the bypass channel 108 at the outer surface 116 through the liner wall 111 and eject it from an exhaust hole 120 of the chute 110 formed on the inner surface 118. In this example, a protruding rim 122 is formed around the exhaust hole 120 on the inner surface 118 to improve flow characteristics in the combustion chamber 104 around the exhaust hole 120, but this rim may not be provided in other embodiments (see Figure 9 for example). The low profile and angled edges of the protruding rim 122 may be less susceptible to erosion in the combustion chamber 104 and may reduce disruption to the internal film cooling of the inner surface 118 of the liner 106, thereby reducing the overall cooling requirement for the combustion apparatus 16.

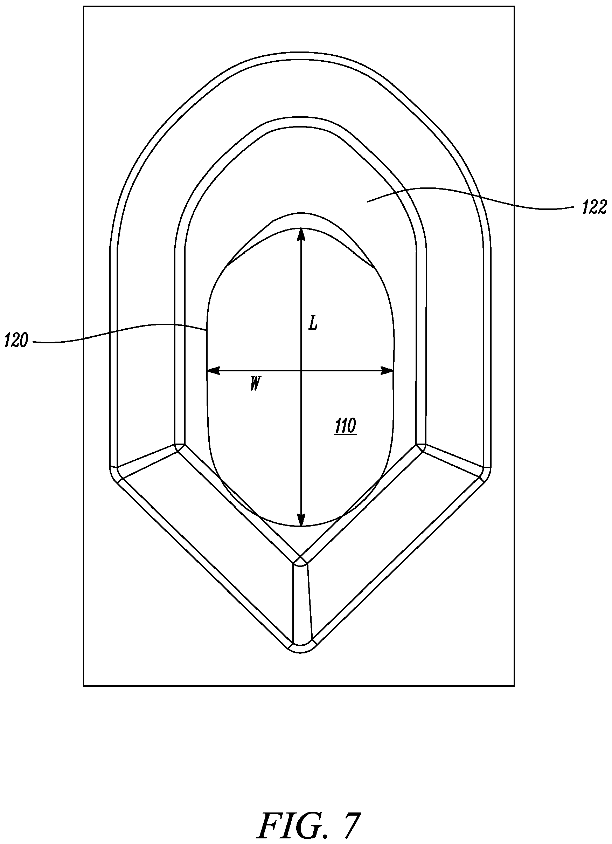

Referring to Figure 7, in the exemplary embodiment shown, the exhaust hole 120 is substantially elliptical. The exhaust hole 120 has a length L parallel with the bypass direction, and a shorter width W along the transverse direction, perpendicular to the bypass direction. In other examples, the exhaust hole may have other shapes, (e.g. circular or polygonal). Irrespective of the shape of the exhaust hole, the exhaust hole will still have a length L which is the maximum dimension of the hole measured parallel to the bypass direction. In the case of a circular hole, the length L is the diameter of the hole. The elliptical shape of the exhaust hole 120 and chute 110 may reduce the overall footprint of the chute 110 on the liner 106, may improve jet penetration into the chamber 104 and may also reduce disruption to the cooling flow on the hot side of the combustor wall. An elliptical hole may also further improve ease of manufacture by additive layer manufacture.

Referring to Figure 5, a fluid-guiding surface 124 is shown upstream of the chute 110. The fluid-guiding surface 124 is configured to guide fluid from the outer surface 116 into the chute 110. The arrows in Figure 5 illustrate the direction of airflow around and through the chute 110. As will be appreciated, the prevailing direction of air flow on the outer surface is in the bypass direction A as shown. However, on exiting the chute 110, the prevailing direction of the injecting air jet is substantially perpendicular to the inner surface 118, or partially upstream. Therefore, the fluid-guiding surface 124 is configured to gradually redirect air from the outer surface through a rotation to be ejected from the chute exhaust hole 120. Fluid is preferably ejected close to perpendicular to the inner surface (or bypass direction) or angled partially upstream. The fluid-guiding surface 124 gradually redirects air to prevent separation of the airflow from the fluid guiding surface.

The embodied fluid-guiding surface 124 defines an arc 126 that extends from the inner surface to the exit hole in the plane X-X (as shown in figure 6) and has a radius R. Computational fluid dynamics simulations may be used to determine an appropriate minimum radius for particular operating conditions and hole size, such that flow separation does not occur. In embodiments, the minimum radius R of the arc of the fluid-guiding surface 124 may be at least 50% of the length L of the exhaust hole 120 of the chute 110. If the radius of the arc varies along its length, then the minimum radius of the arc may be at least 50% of the length L of the exhaust hole 120 of the chute 110. By providing a fluid-guiding surface having at least this radius, it has been found that the airflow over the fluid-guiding surface may be less likely to separate from the surface 124 during travel into the chute 110 and through the necessary rotation, and may have an increased velocity entering the combustion chamber 104 and an improved direction (i.e. closer to perpendicular or partially upstream). This may improve the penetration depth of the air jet into the combustion chamber 104 from the exhaust hole 120 and may also improve mixing of the air jet from the chute 100 into the combustion chamber flow, thereby improving combustion conditions and combustion efficiency. The improved depth of air jet penetration and mixing may also enable the radius of the combustion chamber to be increased and the length of the combustor reduced. This may enable the axial length of the entire engine to be decreased. The improved penetration of airflow may also obviate the need for guide chutes that extend a substantial distance inwardly into the combustor from the inner surface. Such guide chutes have been used to increase penetration depth of the air jet, but they are exposed to harsher conditions in the centre of the combustor and may require more frequent maintenance.

In an embodiment the radius R of the arc 126 of the fluid-guiding surface 124 may be substantially equal to the length L of the exhaust hole 120 of the chute, but more generally the radius R may be optionally between 50-150%, 60-140%, 75-125% 90-110% of the length L of the exhaust hole 120.

Referring to Figure 5, the arc 124 terminates at the exhaust hole 120 at an angle of perpendicular to a plane parallel to the inner surface. The angle between the plane and the arc may be close to perpendicular, i.e. within ±15 degrees, ±10 degrees, ±5 degrees or ±2 degrees. Or, the angle may be greater than 90 degrees, i.e. the angle may direct the jet partially upstream. The term "'terminates' refers to the end of the arc, starting from the upstream end to the downstream end. The angle is taken as a tangent from the arc where it terminates and is measured in the axial-radial plane through the bisection of the chute as shown in figure 5.

As will be appreciated from Figure 6, for example, the fluid-guiding surface 124 may have a different profile to the arc 126 at the extremities of its lateral width, but generally the central area or the fluid-guiding surface 124 in the bypass direction A may conform closely to the arc 126 and may have a radius substantially similar to R.

In the embodiment of figure 5, to provide a fluid-guiding surface having a sufficiently large radius R, the fluid-guiding surface 124 forms a raised aerodynamic bump-like protrusion 128 upstream of the chute 110. That is the fluid guiding surface starts by deviating upwards away from the inner surface before arcing downwards towards the inner surface. This is because the depth D of the liner wall 111 is less than the radius R. However, as the radius R is sufficiently large, the airflow from the outer surface 116 may stay attached to the fluid-guiding surface 124 as it rises over the protrusion 128 and into the chute 110. In other embodiments, e.g. as shown in Figure 9, the depth D of the liner wall may be sufficient that it is equal to or larger than the radius R, such that the fluid guiding surface begins with the outer surface of the liner as a tangent, then arcs towards the inner surface.

In addition to the fluid-guiding surface 124, the liner 106 and chute 110 may have further features which promote improved air jet penetration from the exhaust hole 120 of the chute 110. In some aspects, these further features may be provided in addition to the fluid-guiding surface 124 or, in some aspects, may be provided without the fluid guiding surface.

Referring to Figure 5, the embodiment shown comprises an exhaust deflector surface 130 arranged in the chute 110 proximate the exhaust hole 120 for deflecting a portion of fluid in the chute 110 at least partially upstream during ejection from the inner surface 118. The exhaust deflector surface 130 is formed as a projection or surface which extends from the downstream wall of the chute. The exhaust deflector surface may be positioned immediately adjacent the exhaust hole 120 or may be positioned further radially outwards towards the outer surface. The exhaust deflector surface may be angled obliquely or acutely relative to the downstream side of the inner surface 118 and angled partially upstream. Alternatively, the exhaust deflector may comprise a gradual curve extending from the downstream wall of the chute, also arranged to direct a portion of the airflow upstream. The exhaust surface 130 may extend at least partially upstream relative to the axial direction/bypass direction from the downstream side of the chute. Air travelling over or proximate to the downstream side of the chute 110 will be redirected by an exhaust deflection surface partially in the upstream direction as it is ejected from the exhaust hole 120 (as shown by the airflow arrow in Figure 5). This direction may further delay the jet being consumed by the prevailing airflow in the combustion chamber and may increase the penetration depth of the jet into the chamber 104, improving the mixing of the air jet in the chamber 104. It should be appreciated that the exhaust deflector surface may also improve jet penetration without being combined with a fluid-guiding surface 124 or a fluid deflector 132.

In other embodiments, additionally or alternatively, an exhaust deflector surface may be arranged in a circumferential position between the inner and outer surfaces.

A further feature which may improve the jet penetration and mixing of the chute 110 optionally in isolation from or in combination with the fluid-guiding surface 124 and/or exhaust deflection surface 130, is the fluid deflector 132. The fluid deflector 132 is arranged on a downstream side of the chute 110 on the outer surface 116 of the liner wall 111 and is shaped to deflect airflow into the chute 110.

The fluid deflector 132 may be shaped to redirect airflow which is more distant from the outer surface 116 and is therefore not guided by the fluid guiding-surface 124 into the chute 110 through boundary layer attachment. The fluid deflector may be planar, angled, curved or a scoop-like structure that projects upwards from the outer surface and optionally extends at least partially over the chute. The fluid deflector 132, as shown in Figure 5, is scoop-shaped and substantially arcuate in cross-section, the arcuate scoop extending upstream in the bypass direction A. Accordingly, air which travels towards the deflector 132 will be directed into the chute 110, where in the absence of the deflector, the airflow would have bypassed the chute. More generally, the deflector 132 may be configured to redirect fluid along an arcuate path into the chute 110.

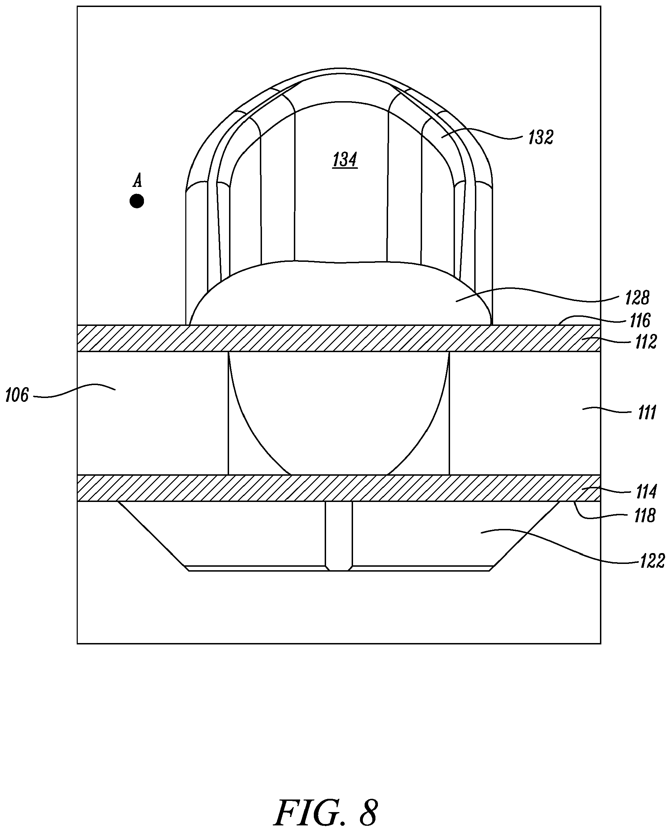

Figure 8 shows the liner 106 as viewed into the plane Y-Y shown in Figure 6. This view is therefore along the bypass direction A, i.e. the prevailing direction of airflow over the outer surface 116.

Referring to Figure 8, the scoop-like fluid deflector 132 protrudes a significant distance from the outer surface 116 of the liner wall 111 and from the bump-like protrusion 128 of the fluid-guiding surface. The fluid deflector 132 therefore defines a scoop 134 which extends into the airflow above the outer surface 116 to inhibit flow of air in the bypass direction A past the chute. Accordingly, the fluid deflector 132 captures and directs airflow which would otherwise have simply travelled past the chute 110 in the absence of the fluid deflector 132. The fluid deflector 132 therefore increases the capture of air flow, increasing flow rate of air into the chute 110, and increasing jet penetration into the chamber 104.

Furthermore, the fluid deflector 132 alters the pressure field of air around the chute 110 which can particularly assist the operation of other features of the present disclosure. For example, the pressure field created by the fluid deflector 132 may augment the attachment of the airflow to the fluid-guiding surface 124 and the upstream side of the chute 110, thereby improving jet penetration and fuel to air mixing.

Figure 9 shows an alternative example of a combustion liner 206. Like features of the liner 206 and the liner 106 are indicated with references differing by 100.

The liner wall 211 of the liner 206 has a depth D' which is greater than the depth D of the liner 106. Accordingly, the liner 206 can accommodate a fluid-guiding surface 224 which has a greater radius R' without the need for a bump-like protrusion upstream of the chute 110. As a larger radius R' can be achieved relative to the length L' of the exhaust hole 220, this may provide yet further improved flow attachment of air entering the chute 210. Furthermore, as no bump-like protrusion is needed, in some examples, air may travel more smoothly into the chute 210 from the outer surface 218 as the outer surface 218 forms a tangent to the arc of the fluid-guiding surface 224, which may further increase jet penetration and mixing.

The example liner 206 of Figure 9 entirely omits any protrusion from the inner surface 218 of the liner wall 211. Accordingly, the liner 206 may have further improved resistance to erosion from the combustion flow in the combustion chamber 204 and may have further improved internal film cooling on the inner surface 218 proximate the exhaust hole 220.

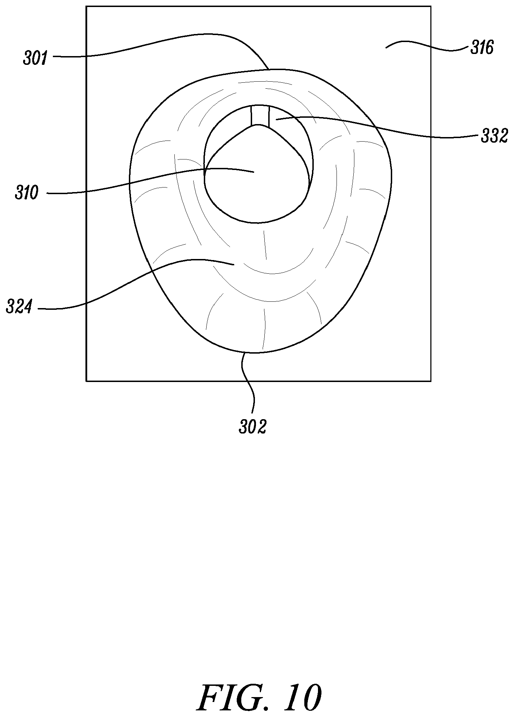

Referring to figure 10 a fluid guiding surface 324 is shown on the outer surface 316 of a combustion liner. The fluid guiding surface is shown extending around the chute 310. Fluid guiding surface transitions from a smooth gradual curve with a minimum radius to an angled wall 332 proximate the downstream-most point of the fluid guiding surface 301. The wall 332 forms the fluid deflecting surface. The fluid guiding surface may extend around a circumference of the chute as shown in figure 9. The fluid guiding surface may alternatively extend partway around the circumference of the chute. In some embodiments, this may be through an angle no less than 45 degrees, or an angle no less than 90 degrees, or an angle no less 135 degrees, or an angle no less than 180 degrees or an angle no less than 270 degrees around the chute. This may improve the liners sensitivity to directionality of airflow. The angle through which the fluid guiding surface extends around the circumference is understood to be measured from the centre point of the chute in a plane incident with the outer surface, and the midpoint of the angle is aligned with the apex of the upstream side of the chute 302.

The combustion liner may be formed from metallic alloys, carbon matrix composites or ceramics. The combustion liner may be made by additive layer manufacture. In embodiments, the combustion liner may be formed using additive layer manufacture building from the downstream end to the upstream end, or from the upstream end to the downstream end.

It will be understood that the invention is not limited to the examples above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A combustion liner (106, 206) for a gas turbine engine (10), the combustion liner (106, 206) defining a bypass direction which extends between an upstream portion and a downstream portion of the combustion liner (106, 206), the combustion liner (106, 206) comprising:
a liner wall (111, 211) for defining at least a portion of a combustion chamber (104, 204), the liner wall (111, 211) having an outer surface (116, 218) and an inner surface (118, 218) and a depth D between the outer and inner surfaces (116, 118) of the combustion liner (106, 206);
a chute (110, 210) formed through the liner wall (111, 211) for conveying fluid from the outer surface (116, 218) through the liner wall (111, 211) and ejecting fluid from an exhaust hole (120, 220) of the chute (110, 210) on the inner surface (118, 218), the exhaust hole (120, 220) having a length L parallel to the bypass direction; and
a fluid-guiding surface (124, 224) on the outer surface of the chute (110, 210), the fluid guiding surface defines an arc terminating at the exhaust hole, the fluid guiding surface configured to guide fluid from a direction generally parallel to the outer surface (116, 218) into the chute (110, 210) to be ejected from the chute (110, 210) exhaust hole (120, 220) at a direction generally perpendicular or upstream, relative to the inner surface, the arc comprising a minimum radius to prevent boundary layer separation of the fluid.

2. The combustion liner (106, 206) as claimed in claim 1, wherein the fluid guiding surface defines an arc (126, 226) having a minimum radius R in a plane aligned with the bypass direction and extending vertically between the outer and inner surfaces of the liner wall (111, 211),
and wherein the radius R of the arc (126, 226) of the fluid-guiding surface (124, 224) is at least 50% of the length L of the exhaust hole (120, 220) of the chute (110, 210).

3. The combustion liner (106, 206) as claimed in claim 2, wherein the radius R is between 50% and 150% of the length L of the exhaust hole (120, 220) of the chute (110, 210).

4. The combustion liner (106, 206) as claimed in claim 2, wherein the radius R is between 75% and 125% of the length L of the exhaust hole (120, 220) of the chute (110, 210).

5. The combustion liner (106, 206) as claimed in claim 2, wherein the radius R is substantially equal to the length L of the exhaust hole (120, 220) of the chute (110, 210).

6. The combustion liner (106, 206) as claimed in any one of the preceding claims, wherein the arc (126, 226) extends through at least 90 degrees.

7. The combustion liner (106, 206) as claimed in any one of the preceding claims, wherein the arc (126, 226) terminates at the exhaust hole at an angle of 90 degrees to the inner surface or a plane parallel thereto.

8. The combustion liner (206) as claimed in any one of the preceding claims, wherein the radius R is substantially equal to the depth D of the liner wall (211), such that the outer surface (216) upstream of the chute (210) forms a tangent to the arc (226) of the fluid-guiding surface (224).

9. The combustion liner (106) as claimed in any one of claims 1-7, wherein the radius R is greater than the depth D of the liner wall (111), such that the fluid-guiding surface (124) forms a protrusion (128) from the outer surface (116) of the liner wall (111) upstream of the chute (110).

10. The combustion liner (106, 206) as claimed in any one of the preceding claims, further comprising a fluid deflector (132, 232) arranged on a downstream side of the chute (110, 210) on the outer surface (116, 218) of the liner wall (111, 211), the fluid deflector (132, 232) being configured to deflect fluid into the chute (110, 210).

11. The combustion liner (106, 206) as claimed in claim 10, wherein the fluid deflector (132, 232) is a scoop-like element (134, 234) configured to deflect fluid along an arcuate path into the chute (110, 210).

12. The combustion liner (106, 206) as claimed in any one of the preceding claims, further comprising an exhaust deflector surface (130, 230) arranged in the chute (110, 210) proximate the exhaust hole (120, 220) for deflecting fluid in the chute (110, 210) at least partially upstream relative to the bypass direction during ejection from the chute (110, 210) exhaust hole (120, 220).

13. The combustor liner (106, 206) as claimed in any one of the preceding claims, wherein the chute (110, 210) and/or the exhaust hole (120, 220) is elliptical, having a major axis of the elliptical shape extending in the bypass direction.

14. A combustion assembly for a gas turbine engine (10) comprising the combustor liner (106, 206) as claimed in any one of the preceding claims.

15. A gas turbine engine (10) for an aircraft comprising:
an engine core (11) comprising a turbine (19), a compressor (14), and a core shaft (26) connecting the turbine to the compressor;
a fan (23) located upstream of the engine core (11), the fan (23) comprising a plurality of fan blades (13); and
the combustion assembly as claimed in claim 14;
and optionally further comprising a gearbox (30) that receives an input from the core shaft (26) and outputs drive to the fan (23) to drive the fan (23) at a lower rotational speed than the core shaft (26).
